# FASCICULE DE BREVET EUROPEEN

(11) **EP 3 738 839 B1**
(45) Date de publication et mention de la délivrance du brevet: **19.10.2022**
(21) Numéro de dépôt: 20174898.5
(22) Date de dépôt: 15.05.2020
(51) Int. Cl.: B60R 19/03, B60R 19/34

(54) **SYSTÈME D'ABSORPTION DE CHOC DE VÉHICULE AUTOMOBILE**
MOTORFAHRZEUG-STOSSDÄMPFERSYSTEM
MOTOR VEHICLE SHOCK ABSORBING SYSTEM

(30) Priorité: 17.05.2019 FR 1905214
(43) Date de publication de la demande: 18.11.2020
(73) Titulaire: Compagnie Plastic Omnium, 69007 Lyon (FR)
(72) Inventeur: GINJA, Stéphane, 01150 SAINTE-JULIE (FR); CHENE, Anthony, 01150 SAINTE-JULIE (FR)
(74) Mandataire: LLR

(56) Documents cités:
- WO-A1-2018/122482
- JP-A- H06 300 067
- US-B2- 9 260 070
- US-B2- 9 598 035

## Description

La présente invention concerne le domaine des équipements de choc, plus particulièrement des systèmes d'absorption d'énergie du type absorbeurs de choc pour véhicule automobile.

On connaît dans l'état de la technique des absorbeurs pour véhicule destinés à être placé entre une poutre de choc transversale et des longerons qui relient l'ensemble au corps du véhicule. Ils peuvent être présents en avant et/ou en arrière du véhicule en s'étendant dans la direction longitudinale. De tels absorbeurs permettent d'absorber l'énergie en cas d'impact de manière à limiter la déformation d'autres composants et les coûts de réparations.

De nos jours, les constructeurs automobiles cherchent à réduire de plus en plus la consommation en énergie des véhicules automobiles, notamment en diminuant le poids de celles-ci. Dans cette optique, ils cherchent à réduire la longueur du véhicule située en porte-à-faux de l'essieu avant, cette longueur et porte-à-faux étant notamment conditionnée par l'encombrement longitudinal des équipements d'absorption de choc, en particulier celui de la poutre et des absorbeurs. Dans cette zone située à l'avant du véhicule, entre la poutre et l'extrémité avant des longerons, une réduction de longitudinale de 50 mm de la longueur de la voiture induit un allégement d'environ 5 kg, incluant par exemple un gain de masse sur le capot et les ailes.

Cependant, la réduction de cette longueur en porte-à-faux, est contrainte par les cahiers des charges qui exigent par exemple, sous certaines conditions de choc, d'éviter l'endommagement d'autres éléments du véhicule comme le système de refroidissement, le capot, les optiques et les éléments de structure comme les longerons, cette protection étant obtenue par l'effet de fusible mécanique procuré par les absorbeurs. Une façon de réduire le porte-à-faux est de réduire la longueur de l'absorbeur en le rendant plus efficace en termes de compressibilité, c'est-à-dire en réduisant sa portion de longueur inutile pour absorber de l'énergie, constituée par son résidu incompressible. L'absorbeur a donc la capacité de se comprimer sur une plus grande portion de sa longueur, ce qui lui permet d'être tout aussi efficace voire plus efficace tout en étant plus court.

Dans le cadre de cette invention, la compressibilité s'entend de la faculté des composants du système d'absorption à beaucoup se déformer, s'écraser ou se détruire, c'est-à-dire à laisser en fin de choc une longueur (un résidu) incompressible la plus faible possible, pour une quantité d'énergie absorbée sur une course donnée, imposées par le cahier des charges. Le résidu incompressible est la longueur restante du système en fin de choc sous un effort donné (sensiblement constant pendant la course d'écrasement) : au-delà de ce point, l'effort de compression augmente considérablement.

A titre d'exemple, un absorbeur métallique classique en acier ou aluminium peut se comprimer sur environ 70% et possède une incompressibilité d'environ 30%. C'est-à-dire que 30% de la longueur de l'absorbeur ne contribue pas à l'absorption d'énergie. On cherche donc à augmenter la compressibilité des absorbeurs pour qu'ils puissent absorber la même énergie dans cas d'impact donné, avec un encombrement axial réduit. Cet encombrement axial est donc le total de la course de compression (pendant laquelle l'énergie est absorbée), et du résidu incompressible restant à la fin. Autrement dit, on cherche à réduire la partie incompressible des absorbeurs qui ne participe pas à l'absorption d'énergie.

On connait des systèmes d'absorption d'énergie basés sur la compression axiale d'un tube en matière composite composé d'une résine constituant la matrice et de fibres de renfort.

Pour favoriser le rendement énergétique, on utilise de préférence des fibres continues disposées par empilement de couches successives dans l'épaisseur du tube. Une couche peut être constituée d'un ou plusieurs renforts, orientés de façon unidirectionnelle (fibres appelées UD) ou selon différentes orientations.

On connait notamment comme fibres continues des UD, des renforts biaxiaux cousus, des renforts tissés, des mats qui sont notamment utilisés dans le procédé de pultrusion. On connait aussi le renforcement par des bandes (ou tape) orientées.

Le mode préférentiel pour la déformation axiale d'un tel tube composite durant la phase de compression sous un effort de choc est le délaminage. Lors d'un tel délaminage, les renforts fibrés se cisaillent dans leur épaisseur et ce cisaillement se propage sur toute la longueur du tube. La résine est réduite en poussière et les différentes couches de renforts sont délaminées dans la direction de l'impact (donc essentiellement « axiale ») et absorbent ainsi de l'énergie.

Le document JP H06 300067 divulgue un système d'absorption du choc selon le préambule de la revendication 1.

L'invention a pour but de fournir un système d'absorption de choc à encombrement réduit, assurant une bonne résistance au choc du véhicule, plus particulièrement de certains éléments comme les longerons. Ce système d'absorption possède un résidu incompressible plus petit que selon l'art antérieur tout en ayant une capacité d'absorption énergétique identique aux absorbeurs selon l'art antérieur, et ce dans le but de réduire le porte-à-faux du véhicule.

A cet effet l'invention a pour objet un système d'absorption de choc pour véhicule automobile, destiné à être intercalé entre un longeron et une poutre de choc transversale, comprenant un élément absorbeur apte à se désintégrer de manière irréversible au moins partiellement pendant un choc, l'élément absorbeur étant un corps creux comprenant une couche interne comprenant des fibres de renfort continues s'étendant dans une direction parallèle à un axe longitudinal de l'élément absorbeur, et au moins deux couches orientées comprenant des fibres de renfort s'étendant dans une direction formant un angle compris entre 50° et 70° avec l'axe longitudinal de l'élément absorbeur, les deux couches orientées formant deux angles opposés s'étendant respectivement d'un côté et de l'autre de l'axe longitudinal de l'élément absorbeur.

Ainsi, on obtient un élément absorbeur comprenant des couches successives comprenant des fibres de renfort orientées par rapport à l'axe longitudinal de l'élément absorbeur. Les angles formés avec ce dernier sont compris dans un intervalle de valeurs spécifique conférant à l'élément absorbeur des capacités d'absorption accrues en minimisant le plus possible le résidu incompressible. Cela permet donc de maximiser la capacité de compression de l'élément absorbeur. En d'autres termes, en choisissant les couches successives telles que décrites ci-dessus, la course de compression de l'élément absorbeur est augmentée, ce qui augmente ses capacités d'absorption. Cela permet d'obtenir la même capacité d'absorption d'énergie avec un élément absorbeur plus court ou d'absorber plus d'énergie avec un élément absorbeur de même longueur que ceux selon l'art antérieur.

On entend par « délaminage » la propriété d'un corps en matériau composite à se cisailler dans son épaisseur longitudinalement. Le délaminage de l'élément absorbeur conduit à une destruction irréversible d'au moins une grande partie de l'élément absorbeur de sorte qu'il ne soit plus d'un seul tenant. La longueur totale de l'absorbeur nécessaire pour le système d'absorption de choc est alors réduite, contribuant à une réduction du porte-à-faux et un allégement considérable du véhicule. Un tel élément absorbeur peut atteindre une compressibilité de plus de 95% (correspondant à un incompressible inférieur à 5%) comparé à un absorbeur aluminium ayant une compressibilité d'environ 70%. De cette manière, la compressibilité de l'élément absorbeur est augmentée de manière conséquente.

Selon l'invention :
- le système d'absorption de choc comprend en outre un élément de liaison du système d'absorption de choc à un longeron et une poutre de choc transversale, l'élément absorbeur étant monté à l'intérieur de l'élément de liaison ;
- l'élément de liaison comprend une extrémité destinée à être fixée à la poutre de choc transversale, une extrémité destinée à être fixée au longeron et une cloison de guidage de l'élément absorbeur située entre les deux extrémités de l'élément de liaison ;

Le système d'absorption de choc selon l'invention peut en outre comprendre une ou plusieurs des caractéristiques suivantes :
- le système d'absorption de choc comprend en outre une couche externe comprenant des fibres de renfort s'étendant dans une direction parallèle à un axe longitudinal de l'élément absorbeur ;
- l'élément absorbeur est apte à se comprimer sur plus de 95% de sa longueur ;
- l'élément absorbeur est apte à se désintégrer par délaminage ;
- l'élément absorbeur comprend à une de ces extrémités une amorce agencée pour initier la désintégration de l'élément absorbeur ;
- l'épaisseur de la paroi de l'élément absorbeur est comprise entre 3 et 9 millimètres ;
- l'élément absorbeur comprend :
   - 45% à 55% en volume de fibres de renfort s'étendant dans une direction parallèle à l'axe longitudinal de l'élément absorbeur ;
   - entre 5% et 10% en volume de fibres de renfort s'étendant dans une direction formant un angle compris entre 60° et 70° avec l'axe longitudinal de l'élément absorbeur ; et
   - de la résine imprégnant les fibres de renfort ;
- l'élément absorbeur comprend une extrémité destinée à être en contact un longeron s'étendant dans un plan perpendiculaire à l'axe longitudinal de l'élément absorbeur et une extrémité destinée à être en contact avec la poutre de choc transversale s'étendant dans un plan non perpendiculaire à l'axe longitudinal de l'élément absorbeur ;
- la résine est un matériau thermoplastique, de préférence une résine acrylique ou polyuréthane, ou un matériau thermodurcissable, de préférence une résine polyester, vinylester ou époxy ;
- l'élément de liaison comprend des moyens antivibratoires de l'élément absorbeur agencés pour empêcher l'élément absorbeur de vibrer lorsque le système d'absorption de choc est monté sur un véhicule automobile ;
- l'élément absorbeur et/ou l'élément de liaison comprennent des moyens d'indexage de l'élément absorbeur dans l'élément de liaison agencés pour empêcher l'élément absorbeur de tourner à l'intérieur de l'élément de liaison ; et
- l'élément de liaison comprend un corps principal accueillant l'élément absorbeur et une platine de fixation du système d'absorption de choc au longeron.

L'invention concerne également un ensemble d'un système d'absorption de choc selon l'invention, d'une poutre de choc transversale et d'un longeron.

### Brève description des figures

L'invention sera mieux comprise à la lecture de la description qui va suivre donnée uniquement à titre d'exemple et faite en se référant aux dessins annexés dans lesquels :
[Fig. 1] est une vue en perspective d'un système d'absorption de choc selon l'invention ;
[Fig. 2] est une vue éclatée du système d'absorption de choc de la figure 1 ;
[Fig. 3] est une vue en coupe longitudinale d'un élément de liaison selon l'invention ;
[Fig. 4] est une vue en coupe longitudinale du système d'absorption de choc de la figure 1 ;
[Fig. 5] est une représentation schématique d'une disposition possible des différentes couches d'un élément absorbeur selon l'invention ;
[Fig. 6] est une vue en coupe longitudinale de l'élément absorbeur selon l'invention comprenant un chanfrein ;
[Fig. 7a] est une vue de d'un premier exemple de disposition d'un système d'absorption de choc contre une poutre de choc transversale ;
[Fig. 7b] est une vue de d'un second exemple de disposition d'un système d'absorption de choc contre une poutre de choc transversale ;
[Fig. 8] est une vue en coupe transversale d'un élément absorbeur selon un mode de réalisation de l'invention.

### Description détaillée

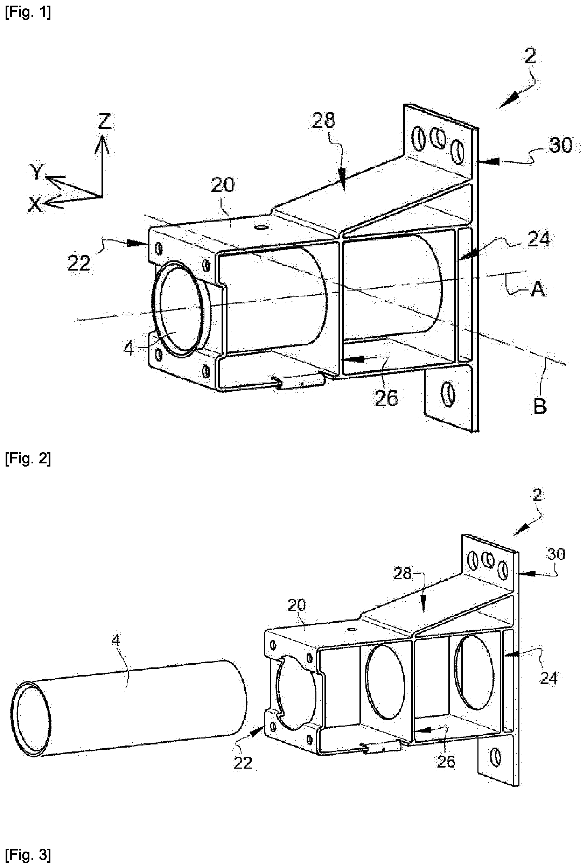

On a représenté sur la figure 1 un repère orthonormé représentant les axes conventionnels X, Y et Z d'un véhicule automobile. Le système d'absorption de choc 2 monté sur un véhicule automobile verra son axe longitudinal A être parallèle à l'axe longitudinal X du véhicule automobile, comme cela est le cas sur la figure 1.

On se réfère désormais à la figure 1 illustrant un système d'absorption de choc 2 destiné à être intercalé entre un longeron et une poutre de choc transversale au niveau du bloc avant d'un véhicule automobile. Il est apte à être assemblé à ces dernier par vissage, rivetage ou soudure.

Le système d'absorption de choc 2 comprend deux éléments absorbeurs 4 dont un est représenté sur la figure 1. Ce dernier est apte à se désintégrer de manière irréversible au moins partiellement en réaction à un choc. Plus précisément, et comme cela a été expliqué ci-dessus, il est apte à se désintégrer par délaminage. Il est apte à se comprimer sur plus de 95% de sa longueur, ce qui signifie ce le résidu incompressible est inférieur à 5%. La course de compression est donc plus importante, ce qui confère une grande capacité d'absorption d'énergie au système d'absorption de choc 2. Cela permet d'obtenir la même capacité d'absorption d'énergie avec un élément absorbeur 4 plus court ou d'absorber plus d'énergie avec un élément absorbeur 4 de même longueur que ceux selon l'art antérieur.

L'élément absorbeur 4 a une forme cylindrique et ayant une section choisie parmi la liste suivante : circulaire, rectangulaire, conique, hexagonale, ou toute autre forme présentant un plan de symétrie. L'épaisseur de la paroi du tube est sensiblement constante sur la longueur de l'élément absorbeur 4, comprise entre 3 et 9 millimètres, de préférence égale à 6 millimètres. La longueur de l'élément absorbeur est quant à elle comprise entre 100 et 300 millimètres.

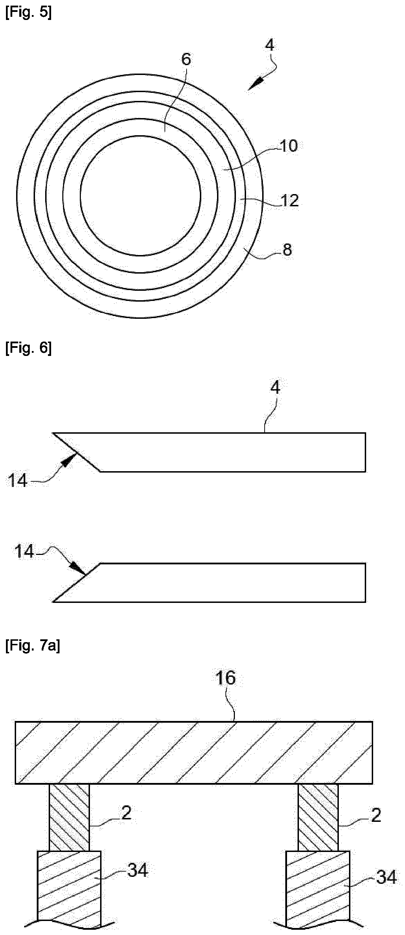

Il peut comprendre quatre couches de matériau comme cela est représenté sur la figure 5 (cette figure n'étant pas à l'échelle et ayant seulement pour but d'illustrer l'empilement des couches de matériau). L'élément absorbeur comprend au moins trois couches de matériau. Chacune de ces couches est composée de fibres de renfort, comme par exemple des fibres de verre, des fibres de carbone ou encore des fibres d'aramide. Ces fibres de renfort sont imprégnées par une matrice. Cette dernière peut être un matériau thermoplastique, de préférence une résine acrylique ou polyuréthane, ou bien un matériau thermodurcissable, de préférence une résine polyester, vinylester ou epoxy. La résine polyester présente les résultats les plus intéressants (bonne capacité à se délaminer au cours d'un choc) tout en étant la matière la plus économique.

Les couches interne 6 et externe 8 comprennent des fibres de renfort unidirectionnelles s'étendant dans une direction parallèle à l'axe longitudinal A de l'élément absorbeur 4. Il s'agit de la direction de tirage des fibres de renfort lors de la fabrication de l'élément absorbeur 4 comme nous le verrons par la suite.

Les couches à fibres orientées 10 et 12 comprennent quant à elle des fibres de renfort unidirectionnelles s'étendant dans une direction formant un angle compris entre 50° et 70° avec l'axe longitudinal A de l'élément absorbeur 4. Cet angle est de préférence compris entre 55° et 65°, idéalement égal à 60°. Comme cela est expliqué ci-dessus, cela confère à l'élément absorbeur des capacités d'amortissement accrues en minimisant le plus possible le résidu incompressible, et donc en maximisant la capacité de compression de l'élément absorbeur. Plus particulièrement, les angles de cet intervalle de valeur permettent d'obtenir de meilleurs résultats qu'une inclinaison selon un angle de 45°.

Les deux angles s'étendent respectivement d'un côté et de l'autre de l'axe longitudinal de l'élément absorbeur. Cela signifie que, en partant du postulat que la direction de tirage (ou l'axe longitudinal A) correspond à une inclinaison de 0°, alors les deux couches à fibres orientées 10 et 12 comprennent des fibres de renfort unidirectionnelles s'étendant selon des directions formant respectivement un axe compris entre 50° et 70° et entre -50° et -70° avec la direction de tirage (ou l'axe longitudinal A).

La couche externe 8 peut être moins épaisse que les autres couches (couche interne 6 et/ou couches à fibres orientées 10 et 12). Par exemple, pour un élément absorbeur 4 d'un diamètre extérieur de 80 millimètres et d'une épaisseur de 6 millimètres, la couche interne 6 peut avoir une épaisseur égale à 5 millimètres, les couches à fibres orientées 10 et 12 une épaisseur égale à 0,4 millimètre et la couche externe une épaisseur égale à 0,2 millimètre. Elle favorise le guidage des fibres de renforts pendant la fabrication de l'élément absorbeur 4 et peut jouer un rôle de protection des autres couches de ce dernier.

On obtient donc un élément absorbeur 4 composite, à renforts continus, multicouches, dont chacune des couches peut avoir une orientation et un taux de fibres de renfort différent d'une autre couche.

Bien évidemment, le nombre de couches peut être plus important, tout comme l'agencement des différentes couches peut varier. On peut par exemple envisager d'intercaler une couche identique aux couches interne 6 ou externe 8 entre les deux couches à fibres orientées 10 et 12. De plus, la nature des fibres de renfort des couches interne 6 et externe 8 d'une part et celle des couches à fibres orientées 10 et 12 d'autre part peuvent être différentes, si bien que l'on peut envisager de produire un élément absorbeur 4 hybride, par exemple de type verre/carbone. On peut donc avoir une couche interne 6 en fibres de verre et une couche externe 8 en fibres de carbone (ou inversement), ou encore une couche à fibres orientées 10 en fibres de verre et une couche à fibres orientées 12 en fibres de carbone (ou inversement). Le type de verre ou le diamètre des fibres peut également varier entre deux couches de matériau.

A titre d'exemple, l'élément absorbeur 4 peut avoir la composition suivante :
- 45 à 55% en volume de fibres de renfort s'étendant dans une direction parallèle à l'axe longitudinal A de l'élément absorbeur ;
- entre 5% et 10% en volume de fibres de renfort s'étendant dans une direction formant un angle compris entre 60° et 70° avec l'axe longitudinal de l'élément absorbeur ; et
- le complément à 100% étant constitué de la résine imprégnant les fibres de renfort, ainsi que d'éventuels faibles pourcentages de charges, de démoulant ou encore de composés de traitement anti retrait.

L'élément absorbeur 4 est réalisé par pultrusion renforcée (ou pullwinding). Ce procédé comprend les étapes suivantes :
- des bobines de fibres de renfort sont stockées sur des supports de bobines ;
- les fibres de renfort sont guidées (tirées) jusqu'à une filière de pultrusion de manière à générer un réseau de fibres de renfort unidirectionnelles orientées dans la direction tirage (i.e. parallèle à l'axe longitudinal A du futur élément absorbeur 4) ;
- les fibres de renfort sont imprégnées par la matrice (ou résine) (thermoplastique ou thermodurcissable) par voie liquide, matrice qui polymérise ensuite par cuisson au cœur de la filière donnant à l'élément absorbeur 4 sa forme. Alternativement, les fibres de renfort peuvent être imprégnées par la matrice directement dans la filière ;
- d'autres bobines de fibres de renfort sont placées sur un support de bobines qui a un mouvement de rotation de manière à créer les couches à fibres orientées 10 et 12. Il est possible de faire varier la direction d'enroulement des fibres de renfort des couches à fibres orientées 10 et 12 dans l'intervalle susmentionné en faisant varier la vitesse de rotation des support de bobines et/ou relativement à la vitesse de tirage des fibres de renfort, ce qui différencie la pultrusion renforcée (pullwinding) d'un procédé de pultrusion classique (par lequel les fibres de renforts sont toutes parallèles à la direction de tirage, quelle que soit la nature des fibres). Il est possible de multiplier le nombre de supports de bobines en rotation, de manière à générer différentes couches de renfort. Des sens de rotation inversés sont mis en œuvre de manière à générer des angles de renforts positifs et négatifs comme cela est expliqué ci-dessus. De préférence, le nombre de supports de bobines est pair.

La pultrusion renforcée étant un procédé continu, le profilé produit peut être découpé en ligne par tronçons (de 100 à 300 millimètres) pour obtenir des éléments absorbeurs 4 à la longueur désirée, par exemple par le biais d'une scie circulaire asservie à la vitesse de tirage des fibres de renfort.

La découpe peut être orthogonale à la direction de tirage. Cela est visible sur la figure 7a (assemblage d'une poutre de choc 16 avec deux systèmes d'absorption de choc 2 (à droite et à gauche sur un véhicule automobile), chaque système d'absorption de choc 2 comprenant un élément absorbeur 4 et un élément de liaison 20). On peut dès lors envisager d'utiliser l'élément absorbeur 4 comme absorbeur d'une poutre de choc transversale 16 dite « droite » (comme représentée sur la figure 7a) destinée à être montée par exemple sur des longerons 34 avant d'un véhicule.

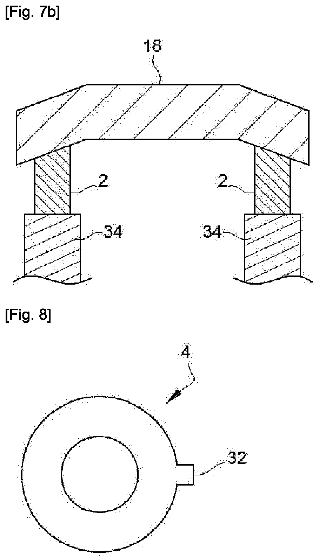

La découpe peut également être dans une direction non orthogonale à la direction de tirage. Cela est visible sur la figure 7b (extrémité supérieure du système d'absorption de choc 2). Il est possible d'envisager deux découpes dont l'une n'est pas orthogonale à la direction de tirage (pour l'extrémité avant de l'élément absorbeur 4 destinée à être en contact avec la poutre de choc 16) et l'autre l'est (pour l'extrémité arrière de l'élément absorbeur 4 destinée à être en contact avec le longeron 34). On peut alors envisager d'utiliser l'élément absorbeur comme absorbeur d'une poutre de choc transversale 18 « galbée » destinée à être montée par exemple sur des longerons 34 avant d'un véhicule. On peut par exemple considérer un absorbeur ayant une découpe orthogonale à l'arrière et une découpe formant un angle de 10° par rapport à un axe transversal B de l'élément absorbeur 4 à l'avant. On entend par « arrière » et « avant » les extrémités du système d'absorption de choc monté sur un véhicule automobile. La face arrière sera apte à s'appuyer sur le longeron. La face avant à 10° étant parallèle à la surface de la poutre de choc transversale 18 contre laquelle l'élément absorbeur 4 est en appui. Pour des raisons de stabilité et de symétrie, il est préférable que les systèmes d'absorption de choc 2 gauche et droit de la poutre soient identiques, ce qui peut rester le cas lorsque que les angles de découpe sont les mêmes.

Comme cela est visible sur la figure 6, l'élément absorbeur 4 peut comprendre à une de ses extrémités une amorce 14 agencée pour initier la désintégration de l'élément absorbeur. Cette amorce 14 crée une zone de faiblesse mécanique permettant d'initier le mode de délaminage en compression de l'élément absorbeur 4 de l'avant vers l'arrière (dans le sens de l'impact), et qui se déforme selon un mode de délamination. Ce tube a la capacité de se délaminer sur sensiblement toute sa longueur. Le but de cette amorce est de supprimer le pic d'amorçage de la désintégration de l'élément absorbeur 4, c'est-à-dire la quantité d'énergie nécessaire pour initier la désintégration de l'élément absorbeur 4.

De préférence, l'élément absorbeur 4 est dimensionné (épaisseur de la paroi, empilement des couches, types et orientations des fibres de renfort des différentes couches, longueur de l'élément absorbeur) pour obtenir un effort dont le plateau est au plus proche du tarage (environ 5 kN de moins) du longeron. Par exemple, pour un véhicule avec un longeron taré à 120 kN, on peut dimensionner l'élément absorbeur 4 pour un effort plateau à 115 kN.

Cette amorce 14 (qui peut être un chanfrein) est de préférence placée sur l'extrémité de l'élément absorbeur 4 destinée à être en contact avec la poutre de choc transversale (16 ou 18) destinée à initier la compression de l'absorbeur et son mode d'absorption d'énergie par délaminage. Elle peut néanmoins être placée à l'extrémité de l'élément absorbeur 4 destinée à être en contact avec un longeron.

Dans le cas d'un chanfrein (visible sur la figure 6), ce dernier est, pour des raisons de facilité de réalisation, de préférence réalisé sur la face interne de l'élément absorbeur 4 (comme cela est visible sur la figure 6), par exemple avec un angle de 45° par rapport à l'axe longitudinal A (ou l'axe transversal B). L'extrémité amincie de l'élément absorbeur 4 (en forme de pointe sur la figure 6) est alors située au niveau de la face externe de ce dernier. Cependant, il est également possible de réaliser le chanfrein sur la face externe avec une extrémité amincie située au niveau de la face interne de l'élément absorbeur 4. L'homme du métier saura déterminer l'angle du chanfrein ainsi que sa longueur en fonction du résultat recherché afin de ne pas avoir de pic d'effort supérieur à l'effort moyen de compression correspondant au tarage de l'élément absorbeur 4.

L'amorce 14 peut être réalisée en ligne, c'est-à-dire sur la ligne de pultrusion juste après l'étape de découpe mentionnée ci-dessus. Il peut par exemple être envisagé d'utiliser une fraise qui usine le profilé tout en état asservie à la vitesse de tirage des fibres de renfort. Il peut aussi être envisagé de réaliser le chanfrein hors ligne, c'est-à-dire dans sur un poste de reprise, voire dans un autre atelier.

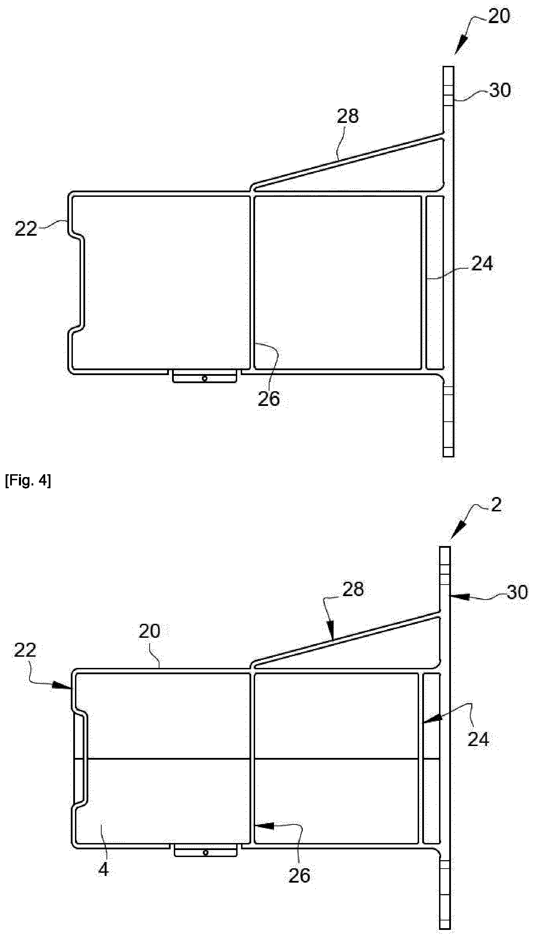

Le système d'absorption de choc 2 comprend également un élément de liaison de ce dernier à une poutre (16 ou 18) et à un longeron. L'élément absorbeur 4 est monté à l'intérieur de l'élément de liaison 20, comme cela est visible sur les figures 1 et 4, la longueur de l'élément absorbeur étant très légèrement inférieure à celle de l'élément de liaison. Cet élément de liaison est important pour conserver une liaison mécanique entre la poutre de choc transversale et le longeron lorsque l'élément absorbeur 4 est désintégré suite à un choc (pour maintenir l'intégrité de l'ensemble).

L'élément de liaison 20 forme un élément de guidage, de préférence métallique, de l'élément absorbeur 4, n'est pas lié de manière continue avec ce dernier et a la capacité de se déformer au cours d'un choc sans gêner la désintégration de l'élément absorbeur 4 (il peut ne contribuer à l'absorption principale d'énergie, celle-ci étant réalisée par l'absorbeur 4, la contribution de l'élément de liaison étant inférieure à 20% de la totalité de l'énergie absorbée). Par exemple, l'élément de liaison 20 ne génère pas un résidu incompressible plus important que celui de l'élément absorbeur 4. A cet effet, l'élément de liaison 20 peut comprendre une zone de faiblesse mécanique programmée permettant à l'élément de liaison 20 d'initier sa propre compression en cas de choc, par exemple en se pliant au niveau de la zone de faiblesse mécanique programmée, et de suivre le mouvement de compression de l'élément absorbeur 4. On entend par « zone de faiblesse mécanique programmée » une zone où la résistance mécanique du matériau est affaiblie de manière à initier et orienter le pliage de la pièce mécanique lorsque celle-ci subit un effort. La zone de faiblesse mécanique programmée peut par exemple être formée par une pré-pliure, au moins un ajourage ou encore une réduction locale de l'épaisseur de l'élément de liaison 20.

L'élément de guidage 20 comprend une extrémité 22 destinée à être fixée à la poutre de choc transversale et une extrémité 24 destinée à être fixée à un longeron. Entre ces deux extrémités, une cloison de guidage 26 est placée. Cette dernière s'étend de préférence dans un plan parallèle aux plans dans lesquels s'étendent les extrémités 22 et 24. La cloison de guidage 26 permet le guidage de l'élément absorbeur 4 lors de sa désintégration en le faisant travailler en pure compression et donc en évitant un effet de déversement.

Afin de ne pas gêner cette désintégration, il est possible de placer la cloison de guidage 26 le plus proche possible de l'extrémité 24 de l'élément de liaison 20. Elle peut par exemple se situer au niveau de la zone correspondant au résidu incompressible de l'élément absorbeur 4 (placée au niveau des 5% de l'élément absorbeur 4 les plus proches du longeron lorsque le système d'absorption de choc est monté sur un véhicule automobile). La cloison de guidage 26 peut néanmoins être placée à proximité de l'extrémité 22 (pour guider l'élément absorbeur 4 en début de compression) ou encore sensiblement à mi-longueur entre les extrémités 22 et 24 puis se déplacer lors de la compression de l'élément de liaison 20 sans gêner la désintégration de l'élément absorbeur 4.

Il peut être judicieux d'avoir une telle cloison de guidage 26 dans le cas d'un absorbeur élancé, ce qui peut être le cas pour un véhicule lourd (i.e. dont le poids est supérieur à 2500 kg, par exemple un SUV à motorisation électrique). En complément, une paroi de rigidification 28 peut être ajoutée pour apporter de la rigidité et de stabilité à l'élément de liaison 20, autorisant par exemple de fixer sur ce dernier des composants du véhicule parmi lesquels un berceau moteur, un support optique, un avertisseur sonore, un guide d'air, un réservoir d'eau ou encore de liquide lave glace.

L'élément de liaison 20 peut être réalisé d'un seul tenant ou encore en plusieurs parties. Par exemple, il peut être constitué d'un profilé (par exemple réalisé par extrusion comme nous le verrons par la suite) assemblé avec une platine 30, par exemple par soudage (ou tout autre méthode conventionnelle connue de l'homme du métier). La platine 30 permet de fixer l'élément de liaison 20 à un longeron.

L'élément de liaison 20 peut également jouer un rôle dans l'indexage de l'élément absorbeur 4 placé dans ce dernier (indexage au montage bloquant la rotation de l'élément absorbeur 4 de section circulaire et qui possède une extrémité réalisée selon un angle de découpe non orthogonal (comme expliqué plus haut)). L'élément absorbeur peut également avoir un rôle actif dans cet indexage. Par exemple, et comme cela est visible sur la figure 8, l'élément absorbeur 4 peut comprendre une nervure 32 collaborant avec une encoche (non représentée) présente au niveau de l'élément de liaison 20. Cette collaboration permet, par exemple lorsque la nervure 32 et l'encoche s'étendent dans une direction parallèle à l'axe longitudinal A, d'éviter la rotation de l'élément absorbeur, notamment lorsque ce dernier a une forme circulaire. Cela permet de conserver le positionnement initial de l'élément absorbeur 4 (i.e. le positionnement de ce dernier lors du montage du système d'absorption de choc sur un véhicule automobile). D'autres dispositifs de centrage et/ou anti-rotatifs peuvent être envisagés. Par exemple, la cloison intermédiaire 26 contribue au centrage de l'élément absorbeur 4.

La nervure 32, de préférence placée sur la face externe de l'élément absorbeur 4, peut être réalisée directement par la filière de pultrusion qui a dans ce cas une forme permettant d'obtenir cette nervure 32. Elle peut être composée seulement de résine, voire de fibres de renfort s'étendant dans une direction parallèle à la direction de tirage.

L'élément de liaison 20 peut en outre comprendre des moyens antivibratoires (non représentés) permettant d'empêcher l'élément absorbeur 4 de vibrer en longitudinal à l'intérieur de ce dernier. En effet, les vibrations du véhicule en roulement pourraient conduire l'élément absorbeur 4 à buter contre la poutre de choc transversale ou le longeron du fait des tolérances de montage et jeu axial résiduel entre les extrémités. En cas de chocs répétés, l'amorce 14 peut être amenée à se détériorer (par exemple à s'aplatir et s'élargir dans le cas d'un chanfrein), ce qui pourrait réduire les performances du système d'absorption de choc 2. Les moyens antivibratoires peuvent être composés d'une mousse (polyuréthane, éthylène-propylène-diène monomère), d'un joint torique ou encore être réalisés par l'intermédiaire d'une liaison mécanique (par exemple par vissage). Ces moyens peuvent être rapportés sur l'élément absorbeur 4 ou encore sur l'élément de liaison 20, par exemple par adhésivage (simple face ou double face) ou encore par collage. Ils sont de préférence placés à proximité de l'extrémité 24 de l'élément de liaison 20.

L'élément de liaison 20 peut être réalisé en métal, de préférence en aluminium. Il est par exemple fabriqué par un procédé d'extrusion d'aluminium. Cette extrusion est réalisée dans une direction perpendiculaire à l'axe longitudinal A (ou parallèle à l'axe transversal B).

Les extrémités 22, 24 et la cloison de guidage 26 étant pleines en sortie d'extrusion, elles sont usinées par la suite pour ménager des évidements permettant le futur passage de l'élément absorbeur 4.

Enfin, l'élément de liaison obtenu est assemblé avec des éléments permettant sa fixation à la poutre de choc transversale et au longeron mais aussi avec l'élément absorbeur.

L'invention n'est pas limitée aux modes de réalisation présentés et d'autres modes de réalisation apparaîtront clairement à l'homme du métier. Il est notamment possible, comme cela a été expliqué ci-dessus, de faire varier le nombre et la disposition des couches formant l'élément absorbeur ou encore la forme de ce dernier.

### Liste des références numériques

2 : système d'absorption de choc
4 : élément absorbeur
6 : couche interne
8 : couche externe
10, 12 : couches à fibres orientées
14 : amorce
16 : poutre de choc transversale droite
18 : poutre de choc transversale galbée
20 : élément de liaison
22, 24 : extrémités de l'élément de liaison
26 : cloison de guidage
28 : paroi de rigidification
30 : platine
32 : nervure
34 : longerons

## Revendications

1. Système d'absorption de choc (2) pour véhicule automobile, destiné à être intercalé entre un longeron et une poutre de choc transversale (16, 18), comprenant un élément absorbeur (4) apte à se désintégrer de manière irréversible au moins partiellement pendant un choc, l'élément absorbeur (4) étant un corps creux comprenant une couche interne (6) comprenant des fibres de renfort continues s'étendant dans une direction parallèle à un axe longitudinal (A) de l'élément absorbeur (4), et au moins deux couches orientées (10, 12) comprenant des fibres de renfort s'étendant dans une direction formant un angle compris entre 50° et 70° avec l'axe longitudinal (A) de l'élément absorbeur (4), les deux couches orientées (10, 12) formant deux angles opposés s'étendant respectivement d'un côté et de l'autre de l'axe longitudinal (A) de l'élément absorbeur(4), le système d'absorption de choc (2) comprenant en outre un élément de liaison (20) du système d'absorption de choc à un longeron et une poutre de choc transversale (16, 18), l'élément absorbeur (4) étant monté à l'intérieur de l'élément de liaison (20), l'élément de liaison (20) comprenant une extrémité (22) destinée à être fixée à la poutre de choc transversale (16, 18) et une extrémité (24) destinée à être fixée au longeron, **caractérisé en ce que** l'élément de liaison (20) comprend une cloison de guidage (26) de l'élément absorbeur (4) située entre les deux extrémités (22, 24) de l'élément de liaison (20).

2. Système d'absorption de choc (2) selon la revendication 1, le système d'absorption de choc (2) comprenant en outre une couche externe (8) comprenant des fibres de renfort s'étendant dans une direction parallèle à un axe longitudinal (A) de l'élément absorbeur.

3. Système d'absorption de choc (2) selon l'une quelconque des revendications précédentes, dans lequel l'élément absorbeur (4) est apte à se comprimer sur plus de 95% de sa longueur.

4. Système d'absorption de choc (2) selon l'une quelconque des revendications précédentes, dans lequel l'élément absorbeur (4) est apte à se désintégrer par délaminage.

5. Système d'absorption de choc (2) selon l'une quelconque des revendications précédentes, dans lequel l'élément absorbeur (4) comprend à une de ces extrémités une amorce (14) agencée pour initier la désintégration de l'élément absorbeur (4).

6. Système d'absorption de choc (2) selon l'une quelconque des revendications précédentes, dans lequel l'épaisseur de la paroi de l'élément absorbeur (4) est comprise entre 3 et 9 millimètres.

7. Système d'absorption de choc (2) selon l'une quelconque des revendications précédentes, dans lequel l'élément absorbeur (4) comprend :
- 45% à 55% en volume de fibres de renfort s'étendant dans une direction parallèle à l'axe longitudinal (A) de l'élément absorbeur ;
- entre 5% et 10% en volume de fibres de renfort s'étendant dans une direction formant un angle compris entre 60° et 70° avec l'axe longitudinal (A) de l'élément absorbeur (4) ; et
- de la résine imprégnant les fibres de renfort.

8. Système d'absorption de choc (2) selon l'une quelconque des revendications précédentes, dans lequel l'élément absorbeur (4) comprend une extrémité destinée à être en contact un longeron s'étendant dans un plan perpendiculaire à l'axe longitudinal (A) de l'élément absorbeur (4) et une extrémité destinée à être en contact avec la poutre de choc transversale (16, 18) s'étendant dans un plan non perpendiculaire à l'axe longitudinal (A) de l'élément absorbeur (4).

9. Système d'absorption de choc (2) selon la revendication 7, dans lequel la résine est un matériau thermoplastique, de préférence une résine acrylique ou polyuréthane, ou un matériau thermodurcissable, de préférence une résine polyester, vinylester ou époxy.

10. Système d'absorption de choc (2) selon l'une quelconque des revendications précédentes, dans lequel l'élément de liaison (20) comprend des moyens antivibratoires de l'élément absorbeur (4) agencés pour empêcher l'élément absorbeur (4) de vibrer lorsque le système d'absorption de choc (2) est monté sur un véhicule automobile.

11. Système d'absorption de choc (2) selon l'une quelconque des revendications précédentes, dans lequel l'élément absorbeur (4) et/ou l'élément de liaison (20) comprennent des moyens d'indexage (32) de l'élément absorbeur (4) dans l'élément de liaison (20) agencés pour empêcher l'élément absorbeur (4) de tourner à l'intérieur de l'élément de liaison (20).

12. Système d'absorption de choc (2) selon l'une quelconque des revendications précédentes, dans lequel l'élément de liaison (20) comprend un corps principal accueillant l'élément absorbeur et une platine (30) de fixation du système d'absorption de choc (2) au longeron.

13. Ensemble d'un système d'absorption de choc (2) selon l'une quelconque des revendications précédentes, d'une poutre de choc transversale (16, 18) et d'un longeron.

## Patentansprüche

1. Stoßdämpfersystem (2) für ein Kraftfahrzeug, das dazu bestimmt ist, zwischen einem Längsträger und einem Queraufprallträger (16, 18) eingefügt zu werden, mit einem Absorberelement (4), das eingerichtet ist, während eines Aufpralls zumindest teilweise irreversibel zu zerfallen, wobei das Absorberelement (4) ein Hohlkörper ist, der eine innere Schicht (6) mit kontinuierlichen Verstärkungsfasern, die sich in einer Richtung parallel zu einer Längsachse (A) des Absorberelements (4) erstrecken, und mindestens zwei ausgerichtete Schichten (10, 12) mit Verstärkungsfasern aufweist, die sich in einer Richtung erstrecken, die einen Winkel zwischen 50° und 70° mit der Längsachse (A) des Absorberelements (4) bildet, wobei die beiden ausgerichteten Schichten (10, 12) zwei gegenüberliegende Winkel bilden, die sich jeweils auf einer Seite und auf der anderen Seite der Längsachse (A) des Absorberelements (4) erstrecken, wobei das Stoßdämpfersystem (2) ferner ein Verbindungselement (20) des Stoßdämpfersystems mit einem Längs- und einem Queraufprallträger (16, 18) aufweist, wobei das Absorberelement (4) innerhalb des Verbindungselements (20) montiert ist, wobei das Verbindungselement (20) ein Ende (22), das dazu bestimmt ist, an dem Queraufprallträger (16, 18) befestigt zu werden, und ein Ende (24), das dazu bestimmt ist, an dem Längsträger befestigt zu werden, aufweist, **dadurch gekennzeichnet, dass** das Verbindungselement (20) eine Trennwand (26) zur Führung des Absorberelements (4) aufweist, die zwischen den beiden Enden (22, 24) des Verbindungselements (20) angeordnet ist.

2. Stoßdämpfersystem (2) nach Anspruch 1, wobei das Stoßdämpfersystem (2) ferner eine äußere Schicht (8) mit Verstärkungsfasern aufweist, die sich in einer Richtung parallel zu einer Längsachse (A) des Absorberelements erstrecken.

3. Stoßdämpfersystem (2) nach einem der vorhergehenden Ansprüche, wobei das Absorberelement (4) über mehr als 95% seiner Länge komprimierbar ist.

4. Stoßdämpfersystem (2) nach einem der vorhergehenden Ansprüche, wobei das Absorberelement (4) durch Delaminierung zerfallen kann.

5. Stoßdämpfersystem (2) nach einem der vorhergehenden Ansprüche, wobei das Absorberelement (4) an einem seiner Enden einen Zünder (14) aufweist, der so angeordnet ist, dass er den Zerfall des Absorberelements (4) einleitet.

6. Stoßdämpfersystem (2) nach einem der vorhergehenden Ansprüche, wobei die Wandstärke des Absorberelements (4) zwischen 3 und 9 Millimetern beträgt.

7. Stoßdämpfersystem (2) nach einem der vorhergehenden Ansprüche, wobei das Absorberelement (4) aufweist:
- 45 bis 55 Vol.-% Verstärkungsfasern, die sich in einer Richtung parallel zur Längsachse (A) des Absorberelements erstrecken;
- zwischen 5 und 10 Vol.-% Verstärkungsfasern, die sich in einer Richtung erstrecken, die mit der Längsachse (A) des Absorberelements (4) einen Winkel zwischen 60° und 70° bildet; und
- Harz, das die Verstärkungsfasern imprägniert.

8. Stoßdämpfersystem (2) nach einem der vorhergehenden Ansprüche, wobei das Absorberelement (4) ein Ende, das dazu bestimmt ist, einen Längsträgers zu berühren, der sich in einer Ebene senkrecht zur Längsachse (A) des Absorberelements (4) erstreckt, und ein Ende, das dazu bestimmt ist, den Queraufprallträgers (16, 18) zu berühren, der sich in einer Ebene nicht senkrecht zur Längsachse (A) des Absorberelements (4) erstreckt, aufweist.

9. Stoßdämpfersystem (2) nach Anspruch 7, wobei das Harz ein thermoplastisches Material, vorzugsweise ein Acryl- oder Polyurethanharz, oder ein wärmehärtendes Material, vorzugsweise ein Polyester-, Vinylester- oder Epoxidharz, ist.

10. Stoßdämpfersystem (2) nach einem der vorhergehenden Ansprüche, wobei das Verbindungselement (20) ein Absorberelement (4) - Antivibrationsmittel aufweist, das so angeordnet ist, dass es das Absorberelement (4) an einer Vibration hindert, wenn das Stoßdämpfersystem (2) an einem Kraftfahrzeug angebracht ist.

11. Stoßdämpfersystem (2) nach einem der vorhergehenden Ansprüche, wobei das Absorberelement (4) und/oder das Verbindungselement (20) Indexierungsmittel (32) des Absorberelements (4) in dem Verbindungselement (20) aufweisen, die so angeordnet sind, dass sie das Absorberelement (4) an einer Drehung innerhalb des Verbindungselements (20) hindern.

12. Stoßdämpfersystem (2) nach einem der vorhergehenden Ansprüche, wobei das Verbindungselement (20) einen Hauptkörper, der das Absorberelement aufnimmt, und eine Platine (30) zur Befestigung des Stoßdämpfersystems (2) am Längsträger aufweist.

13. Anordnung aus einem Stoßdämpfersystem (2) nach einem der vorhergehenden Ansprüche, einem quer verlaufenden Aufprallträger (16, 18) und einem Längsträger.

## Claims

1. Shock absorption system (2) for motor vehicle, intended to be interspersed between a spar and a transverse impact beam (16, 18), comprising an absorbing element (4) capable of irreversibly disintegrating at least partially during an impact, the absorbing element (4) being a hollow body comprising an inner layer (6) comprising continuous reinforcement fibres extending in a direction parallel to the absorbing element (4) longitudinal axis (A), and at least two oriented layers (10, 12) comprising reinforcement fibres extending in a direction forming an angle between 50° and 70° with the absorbing element (4) longitudinal axis (A), the two oriented layers (10, 12) forming two opposite angles extending respectively on one side and the other of the absorbing element (4) longitudinal axis (A), the shock absorption system (2) further comprising a connecting element (20) of the shock absorption system to a spar and a transverse impact beam (16, 18), the absorbing element (4) being mounted inside the connecting element (20), the connecting element (20) comprising one end (22) intended to be attached to the transverse impact beam (16, 18) and an end (24) intended to be attached to the spar, **characterized in that** the connecting element (20) comprises a guide bulkhead (26) of the absorbing element (4) located between the two ends (22, 24) of the connecting element (20).

2. Shock absorption system (2) according to claim 1, the shock absorption system (2) further comprising an outer layer (8) comprising reinforcement fibers extending in a direction parallel to the absorbing element longitudinal axis (A).

3. Shock absorption system (2) according to any one of the preceding claims, wherein the absorbing element (4) is able to compress over more than 95% of its length.

4. Shock absorption system (2) according to any one of the preceding claims, wherein the absorbing element (4) is capable of disintegrating by delamination.

5. Shock absorption system (2) according to any one of the preceding claims, wherein the absorbing element (4) comprises, at one of these ends, a primer (14) arranged to initiate the disintegration of the absorbing element (4).

6. Shock absorption system (2) according to any one of the preceding claims, wherein the wall thickness of the absorbing element (4) is comprised between 3 and 9 millimeters.

7. Shock absorption system (2) according to any one of the preceding claims, wherein the absorbing element (4) comprises:
- 45% to 55% by volume of reinforcement fibers extending in a direction parallel to the absorbing element longitudinal axis (A);
- between 5% and 10% by volume of reinforcement fibers extending in a direction forming an angle between 60° and 70° with the absorbing element (4) longitudinal axis (A); and
- resin impregnating the reinforcement fibers.

8. Shock absorption system (2) according to any one of the preceding claims, wherein the absorbing element (4) comprises an end intended to be in contact with a spar extending in a plane perpendicular to the absorbing element (4) longitudinal axis (A) and an end intended to be in contact with the transverse impact beam (16, 18) extending in a plane not perpendicular to the absorbing element (4) longitudinal axis (A).

9. Shock absorption system (2) according to claim 7, wherein the resin is a thermoplastic material, preferably an acrylic or polyurethane resin, or a thermosetting material, preferably a polyester, vinylester or epoxy resin.

10. Shock absorption system (2) according to any one of the preceding claims, wherein the connecting element (20) comprises anti-vibration means of the absorbing element (4) arranged to prevent the absorbing element (4) from vibrating when the shock absorption system (2) is mounted on a motor vehicle.

11. Shock absorption system (2) according to any one of the preceding claims, wherein the absorbing element (4) and / or the connecting element (20) comprise means of indexing (32) of the absorbing element (4) in the connecting element (20) arranged to prevent the absorbing element (4) from rotating inside the connecting element (20).

12. Shock absorption system (2) according to any one of the preceding claims, wherein the connecting element (20) comprises a main body housing the absorbing element and a plate (30) for fixing the shock absorption system (2) to the spar.

13. Set of a shock absorption system (2) according to any one of the preceding claims, a transverse impact beam (16, 18) and a spar.
